# EUROPEAN PATENT APPLICATION

(11) **EP 1 258 421 A1**
(43) Date of publication of application: **20.11.2002**
(21) Application number: 01201759.6
(22) Date of filing: 14.05.2001
(51) Int. Cl.: B62K 15/00

(54) **Foldable bicycle**

(71) Applicant: MERIDA INDUSTRY CO., LTD., Meikang Village, Tatsun Hsiang, Changhua Hsien (TW)
(72) Inventor: Tseng, Diing-Huang, Tatsun Hsiang, Changhua Hsien (TW)
(74) Representative: Hooiveld, Arjen Jan Winfried

(57) **Abstract**

A foldable bicycle has a rear frame (10) having a rear wheel assembled at a rear end thereof and located at a first side thereof. A seat tube (20) is assembled at a front end of the rear frame (10) and has a seat provided at a top thereof. A link tube (30) has a rear end pivotally mounted to a lower end of the seat tube (20). A front frame (40) is assembled at a front end of the link tube (30) and has a front wheel assembled thereon and located at a first side thereof and in alignment with the rear wheel. A handlebar (50) is pivotally mounted at a top of the front frame (40). A cushion (60) is assembled between the rear frame (10) and the seat tube (20).

## Description

### 1. Field of the Invention

The present invention is related to a bicycle, and more particularly to a foldable bicycle.

### 2. Description of Related Art

A foldable bicycle generally has a foldable handlebar and a foldable frame. In folding the bicycle, the handlebar is first folded beside the front wheel, and the frame is folded to bring the front wheel close to the rear wheel. The conventional foldable bicycle has the following shortcomings:
1. The front wheel and the rear wheel are fitted in a front fork and a rear fork respectively. When the bicycle is folded, an overall width of the bicycle is equal to the combined width of the front fork and the width of the rear fork, so the folded bicycle is not compact.
2. The handlebar and the frame of the bicycle are unable to be suitably positioned when the bicycle is folded, which is very inconvenient for a user to carry.

Therefore, the invention provides an improved foldable bicycle to mitigate and/or obviate the aforementioned problems.

The main objective of the invention is to provide a foldable bicycle which can effectively decrease the volume of the bicycle when it is folded.

Another objective of the invention is to provide a foldable bicycle of which a handlebar and a frame are able to be conveniently positioned.

Other objects, advantages and novel features of the invention will become more apparent from the following detailed description when taken in conjunction with the accompanying drawings.
Fig. 1 is a front view of a foldable bicycle in accordance with the invention;
Fig. 2 is a top view of the foldable bicycle in accordance with the invention;
Fig. 3 is an exploded perspective view of a drum brake assembled on a rear frame of the bicycle in accordance with the invention;
Fig. 4 is a sectional view showing that a first barrel is pivotally mounted on a joint and fastened by a first locking handle;
Fig. 5 is an exploded sectional view showing that a stem is pivotally mounted on a lateral tube by a second barrel and fastened by a second locking handle; and
Fig. 6 is a schematic view of a folded bicycle in accordance with the invention.

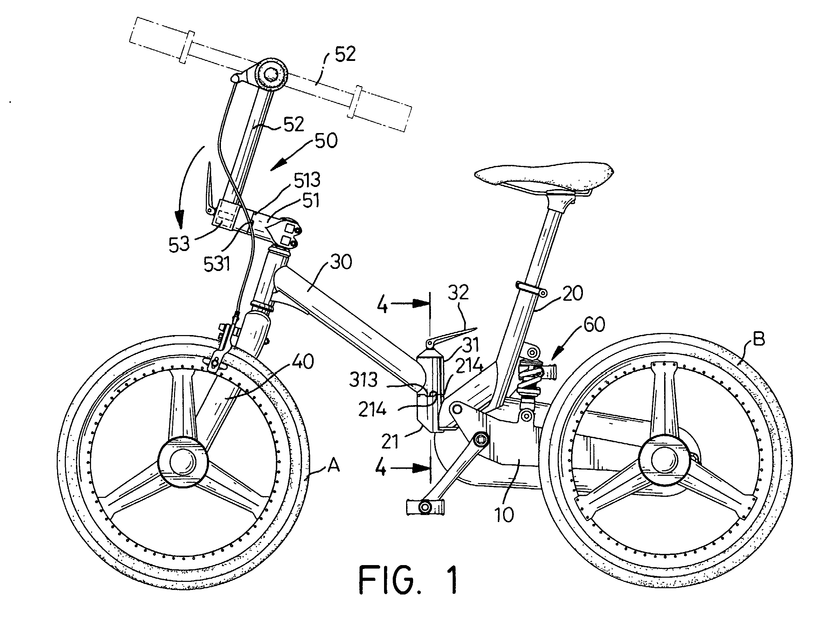

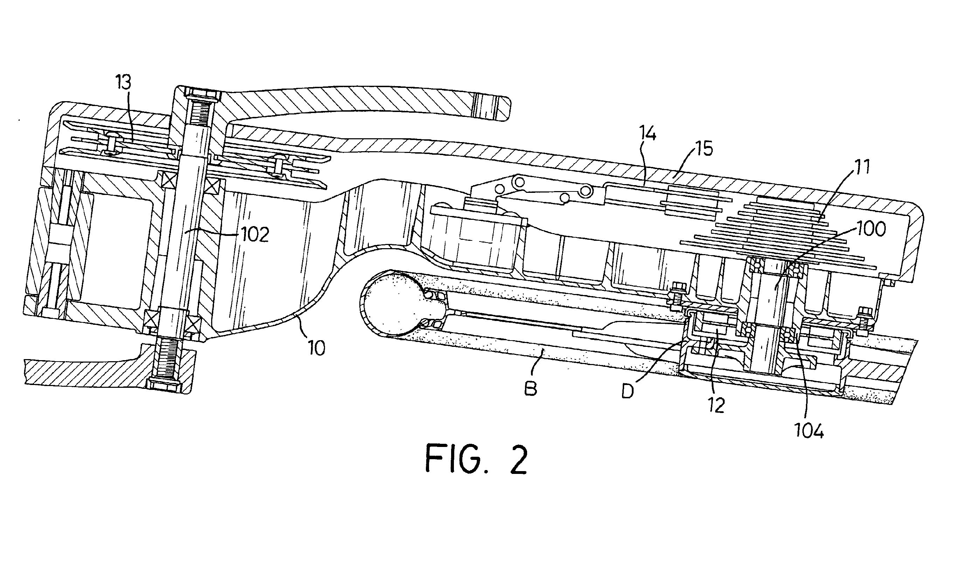

Referring to Figs. 1 and 2, a foldable bicycle in accordance with the invention is composed of a rear frame (10), a seat tube (20) mounted on the rear frame (10), a link tube (30) pivotally mounted with the seat tube (20), a front frame (40) mounted at a front end of the link tube (30), a handlebar (50) assembled on a top of the front frame (40), a cushion (60) assembled between the rear frame (10) and the seat tube (20), a front wheel (A) assembled on the front frame (40), and a rear wheel (B) assembled on the rear frame (10).

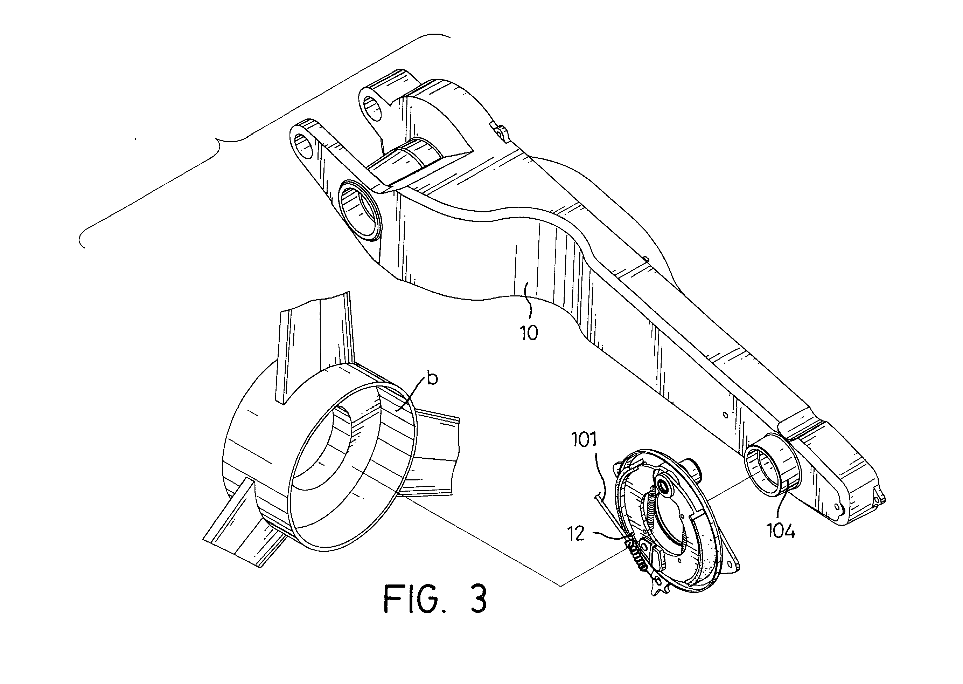

A rear axle (100) is inserted through a rear end of the rear frame (10). A rear gear assembly (11) and the rear wheel (B) are installed on the rear axle (100) and respectively located at a first side and a second side of the rear frame (10). A flange (104) is formed at the second side of the rear frame (10) and the rear axle (100) extends through the flange (104). A drum brake (12) is installed on the flange (104). Referring to Fig. 3, the drum brake (12) is received in a drum (b) coaxially provided on the rear wheel (B). When a user pulls a brake cable (101) connected with the drum brake (12), the drum brake (12) is expanded to rub against the inner wall of the drum (b), and thus the rear wheel (B) and the bicycle are stopped. As the drum brake (12) is a well-known device for those skilled in the art, it is not described in detail hereinafter.

Referring back to Fig. 2, a crank axle (102) is installed at a front end of the rear frame (10) and parallel to the rear axle (100). A front gear (13) is installed on the crank axle (102) and located at the first side of the rear frame (10) to align with the rear gear assembly (11). A derailleur (14) is installed between the front gear (13) and the rear gear assembly (11). The front gear (13) is connected with the rear gear assembly (11) by a chain (not shown or numbered), and a chain guard (15) is provided outside the chain.

Furthermore, the cushion (60) is substantially perpendicular to the ground, as shown in Fig. 1.

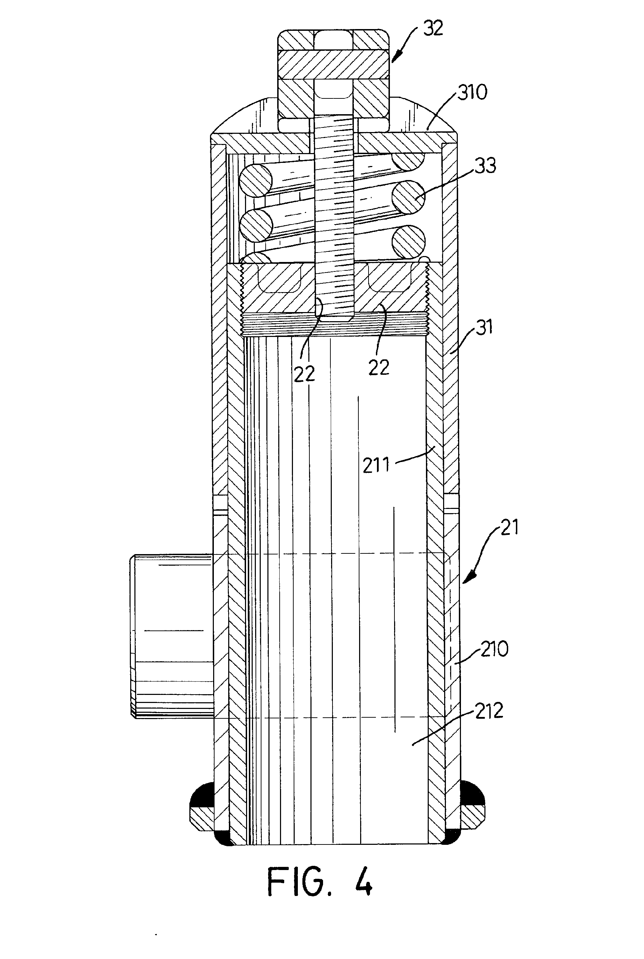

Referring to Figs. 1 and 4, the seat tube (20), which has a seat (not numbered) provided at a top thereof, is assembled at the front end of the rear frame (10) and pivotally mounted with the link tube (30). The seat tube (20) has a joint (21) being composed of an outer tube (210) and an inner tube (211), wherein the inner tube (211) is longer than the outer tube (210) and extends out from the outer tube (210). A hole (212) is defined at a lower end of the inner tube (211). The bicycle is able to be secured on an automobile by receiving in the hole (212) a stub provided at the back of the automobile.

A first barrel (31) is formed at a rear end of the link tube (30) and pivotally mounted on the joint (21) by receiving the inner tube (211) therein. The joint (21) further has a first fixer (22) engaged in an upper end of the inner tube (211), and a first thread hole (221) is defined in the first fixer (22). A first locking handle (32) has a bolt (not numbered) extending through an upper cover (310) of the first barrel (31) and engaged in the first thread hole (221). A resilient member (33) is provided between the first barrel (31) and the fixer (22). Loosening the first locking handle (32) enables the first barrel (31) to turn about the joint (21) for folding the bicycle. Furthermore, the joint (21) has at least two first notches (214) defined at a top end of the outer tube (210), and the first barrel (31) has at least one first tooth (313) formed at a lower end thereof and engaged in one of the first notches (214) to prevent the first barrel (31) from escaping from the joint (21).

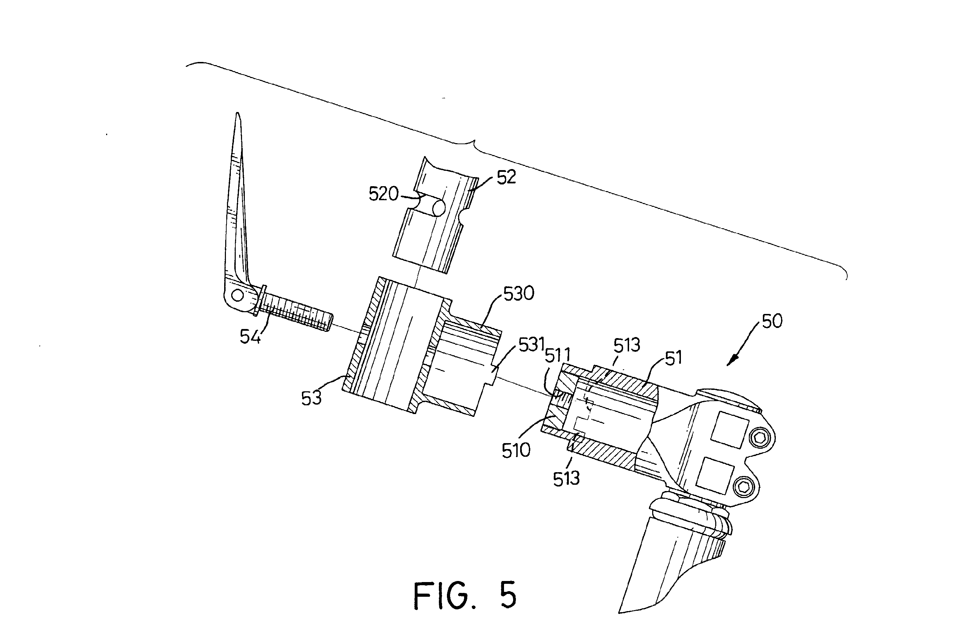

Referring to Figs. 1 and 5, the handlebar (50) has a lateral tube (51) assembled at a top end of the front frame (40), and a stem (52) pivotally mounted on the lateral tube (51) by a second barrel (53). The lateral tube (51) has a second fixer (510) provided at a distal end thereof and a second thread hole (511) is defined in the second fixer (510). At least two second notches (513) are defined at the distal end of the lateral tube (51). The second barrel (53) has a longitudinal opening (530) defined at a lower end thereof, and a transversal opening (not numbered ) defined at an upper end thereof. The second barrel (53) is pivotally mounted on the lateral tube (51) by receiving the distal end of the lateral tube (51) in the longitudinal opening (530). The second barrel (53) has at least one second tooth (531) formed at a lower end thereof and engaged with one of the second notches (513) to prevent the second barrel (53) from escaping from the lateral tube (51). The stem (52) is inserted in the transversal opening of the second barrel (53) and has an aperture (520) radially defined therethrough. A second locking handle (54) has a second bolt (not numbered) extending through the second barrel (53) and the aperture (520) of the stem (52), and engaged in the second thread hole (511) to fasten the second barrel (53) to the lateral tube (51). Loosening the second locking handle (54) enables the second barrel (53) to turn about the lateral tube (51) for folding the handlebar (50).

In folding the bicycle, the second locking handle (54) is loosened, the second barrel (53) is pulled outwards to disengage the second tooth (531) from the second notch (513), and the stem (52) is turned downwards about the lateral tube (51) until the second tooth (531) is engaged with another second notch (531). Afterwards, the second locking handle (54) is tightened to secure the second barrel (53) to the lateral tube (51). Then, the handlebar (50) is folded about the front frame (40).

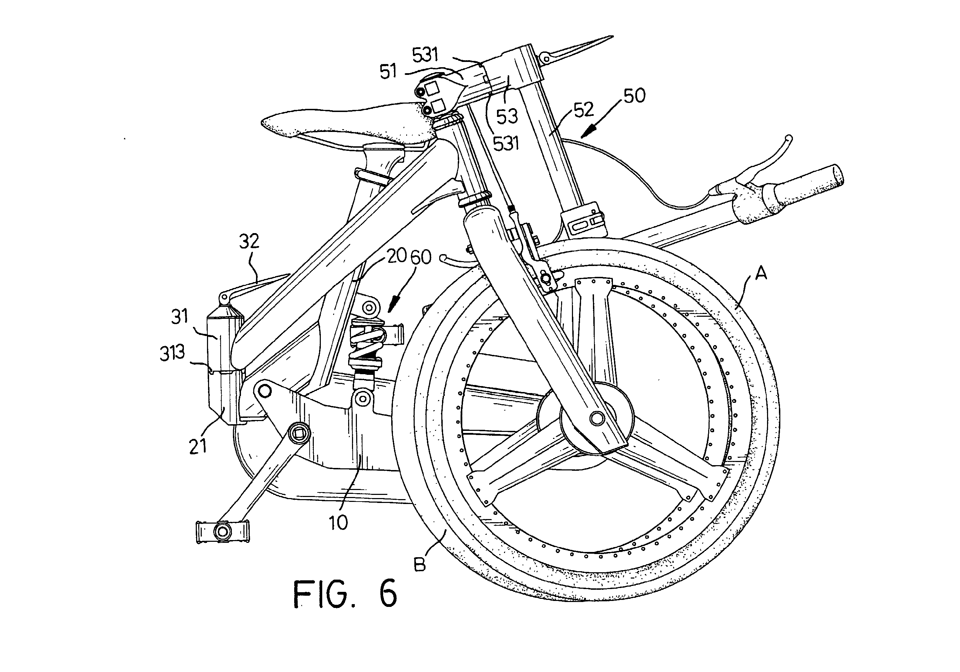

Thereafter, the first locking handle (32) is loosened, the first barrel (31) is pushed up under the force of the resilient member (33) to disengage the first tooth (313) from the first notch (214), and the link tube (30) is turned backwards about the joint (21) until the first tooth (313) is engaged with another first notch (214). Afterwards, the first locking handle (32) is tightened to secure the first barrel (31) to the joint (21). Thus, the front frame (40) with the folded handlebar (50) is folded about the rear frame (10). Figure 6 shows the folded bicycle in accordance with the present invention.

From the above description, it is noted that the invention has the following advantages:
1. Because the front wheel and the rear wheel are respectively assembled on the front frame without a front fork and the rear frame without a rear fork, the overall dimension of the bicycle is effectively reduced when the bicycle is folded.
2. The handlebar and the frame are able to be positioned by the locking handles, which provides great convenience for a user when carrying the folded bicycle.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A foldable bicycle comprising:
a rear frame (10) having a rear wheel (B) assembled at a rear end thereof and located at a first side thereof;
a seat tube (20) assembled at a front end of the rear frame (10) and having a seat provided at a top thereof;
a link tube (30) having a rear end pivotally mounted to a lower end of the seat tube (20);
a front frame (40) assembled at a front end of the link tube (30) and having a front wheel (A) assembled thereon and located at a first side thereof and in alignment with the rear wheel (B);
a handlebar (50) pivotally mounted at a top of the front frame (40), and
a cushion (60) assembled between the rear frame (10) and the seat tube (20).

2. The foldable bicycle as claimed in claim 1, wherein the seat tube (20) has a joint (21) formed at a lower end thereof; and
the link tube (30) has a first barrel (31) formed at the rear end thereof and pivotally mounted on the seat tube (20), and a first locking handle (32) to secure the first barrel (31) to the seat tube (20).

3. The foldable bicycle as claimed in claim 2, wherein the joint (21) has an outer tube (210), an inner tube (211) longer than the outer tube (210) and extending out from the outer tube (210), and a first fixer (22) with a first thread hole (221) provided at an upper end of the inner tuber (211); and
the first locking handle (32) has a first bolt extending through an upper cover (310) of the first barrel (31) and engaged in the first thread hole (221).

4. The foldable bicycle as claimed in claim 3, wherein the joint (21) has at least two first notches (214) defined at a top end of the outer tube (210), and
the first barrel (31) has at least one first tooth (313) formed at a lower end thereof and engaged in one of the first notches (214).

5. The foldable bicycle as claimed in claim 3, wherein the inner tube (211) has a hole (212) defined at a lower end thereof.

6. The foldable bicycle as claimed in claim 1, wherein the handlebar (50) has a lateral tube (51) assembled at the top end of the front frame (40), a stem (52) having a lower end pivotally mounted at a distal end of the lateral tube (51) by a second barrel (53), and a second locking handle (54) to secure the second barrel (53) to the lateral tube (51).

7. The foldable bicycle as claimed in claim 6, wherein the second barrel (53) has a longitudinal opening and a transversal opening perpendicular to each other;
the lateral tube (51) is inserted in the longitudinal opening of the second barrel (53) and has a second fixer (510) with a second thread hole (511) provided at the distal end thereof;
the stem (52) is inserted in the transversal opening of the second barrel (53) and has an aperture (520) radially defined therethrough; and
the second locking handle (54) has a second bolt extending through the aperture (520) and the second barrel (53), and engaged in the second thread hole (511).

8. The foldable bicycle as claimed in claim 6, wherein the lateral tube (51) has at least two second notches (513) defined at the distal end thereof; and
the second barrel (53) has at least one second tooth (531) formed at a lower end thereof and engaged in one of the second notches (513).

9. The foldable bicycle as claimed in claim 1, wherein the rear frame (10) has a rear axle (100) inserted through the rear end thereof and the rear wheel (B), a rear gear assembly (11) located at a second side thereof and assembled on the axle (100), a crank axle (102) inserted through the front end thereof, a front gear assembly (13) assembled on the crank axle (102) and in alignment with the rear gear assembly (11), and a chain connecting the front gear assembly (13) with the rear gear assembly (11).

10. The foldable bicycle as claimed in claim 9, wherein the rear frame (10) has a drum brake (12) coaxially assembled on the rear wheel (B).

11. The foldable bicycle as claimed in claim 9, wherein the rear frame (10) has a derailleur (14) assembled between the front gear assembly (13) and the rear gear assembly (11).

12. The foldable bicycle as claimed in claim 9, wherein the rear frame (10) has a chain guard (15) provided outside the chain.

13. The foldable bicycle as claimed in claim 1, wherein the cushion (60) is substantially perpendicular to the ground.
